# EUROPEAN PATENT SPECIFICATION

(11) **EP 3 940 950 B1**
(45) Date of publication and mention of the grant of the patent: **04.10.2023**
(21) Application number: 20922466.6
(22) Date of filing: 19.05.2020
(51) Int. Cl.: H02S 20/30, H02S 50/00

(54) **PHOTOVOLTAIC SYSTEM**
FOTOVOLTAIKSYSTEM
SYSTÈME PHOTOVOLTAÏQUE

(43) Date of publication of application: 19.01.2022
(73) Proprietor: Huawei Digital Power Technologies Co., Ltd., Shenzhen, 518043 (CN)
(72) Inventor: WAN, Song, Shenzhen, Guangdong 518129 (CN); SUN, Wuben, Shenzhen, Guangdong 518129 (CN); MENG, Yuandong, Shenzhen, Guangdong 518129 (CN); WANG, Zhigang, Shenzhen, Guangdong 518129 (CN); ZHANG, Yanzhong, Shenzhen, Guangdong 518129 (CN)
(74) Representative: Pfenning, Meinig & Partner mbB
(86) International application number: PCT/CN2020/091118
(87) International publication number: WO 2021/232257

(56) References cited:
- WO-A1-2019/244146
- CN-A- 102 340 264
- CN-A- 103 944 510
- CN-A- 105 119 559
- CN-A- 105 141 232
- CN-A- 106 059 492
- CN-A- 108 233 870
- CN-A- 110 620 551
- JP-A- 2017 199 885

## Description

### TECHNICAL FIELD

This application relates to the field of power electronics technologies, and in particular, to a photovoltaic system.

### BACKGROUND

Photovoltaic power generation is widely used as a clean renewable energy source. A photovoltaic system can convert light energy into electric energy, and supply power to a power grid. Generally, a tracker system is usually used for photovoltaic power generation to improve utilization of illumination resources. Compared with a conventional fixed rack, a photovoltaic module installed on a tracker may rotate along with a tracking axis, and track a moving track of the sun within one day based on an astronomical algorithm, to reduce an angle of incidence of light, thereby improving utilization of sunlight energy received on a surface of the photovoltaic module, and improving an electric energy yield of the photovoltaic system.

Currently, the photovoltaic tracking system generally has anti-tracking. Specifically, a triangular geometric model is established based on a distance between photovoltaic racks, a module length, and a solar zenith angle to calculate a tracking angle of the module, and a plurality of trackers in the photovoltaic system are controlled, based on the calculated tracking angle, to rotate.

In actual use, due to particularity of an installation environment of the photovoltaic system, distances between the plurality of trackers and heights of the plurality of trackers are different in some application scenarios (for example, a terrain is not flat). When the trackers are controlled, based on the tracking angle calculated through anti-tracking, to rotate, a photovoltaic module connected to one or more photovoltaic racks may be blocked, and consequently the electric energy yield of the photovoltaic system is reduced.

CN 105119559A discloses an automatic sensing adjustment solar power collection device, which comprises a supporting device, photovoltaic modules and a voltage inverter arranged on the supporting device, and a battery connected with the voltage inverter. The top end of the supporting device is provided with an illumination sensor. The illumination sensor is connected with a controller for receiving solar ray signals sensed by the illumination sensor. The photovoltaic modules are movably connected with the supporting device via driving devices. The driving devices receive signals transmitted by the controller to drive the photovoltaic modules to change angles and directions to enable light receiving faces of the photovoltaic modules to be vertical to the solar rays.

CN 103944510A discloses a photovoltaic module output characteristic determination method which is mainly characterized in that a single battery serves as a basic unit. Output characteristics of a blocked battery and a battery string with the blocked battery are firstly analyzed according to current flowing through a photovoltaic module, and the conducting state of a bypass diode is further judged based on theoretical analysis for volt-ampere characteristics of the bypass diode.

WO 2019/244146 A1 discloses a solar panel system, which is configured to receive from a sensor module an indication about the environmental conditions in the surroundings of the solar panel, turn the energy-absorbent face of the solar panel to face the sun when sufficient daylight is detected by the sensor module, and to turn the energy-absorbent face of the solar panel to face the surface when the sensed conditions are not suitable for energy absorbance.

### SUMMARY

The invention is set out in the appended set of claims. This application provides a photovoltaic system, to improve an electric energy yield of the photovoltaic system.

An embodiment of this application provides a photovoltaic system. The photovoltaic system may include a plurality of photovoltaic racks, a plurality of photovoltaic strings connected to the plurality of photovoltaic racks, a detector, and a controller. Each photovoltaic string in the plurality of photovoltaic strings is connected to an inverter. The controller is connected to the plurality of photovoltaic racks. The detection module is separately connected to the controller and the plurality of photovoltaic strings.

Each photovoltaic rack in the plurality of photovoltaic racks is configured to rotate by an angle under control of the controller, to adjust illumination angles of a plurality of connected photovoltaic strings. Each photovoltaic string in the plurality of photovoltaic strings is configured to convert light energy into electric energy. The detection module may be configured to: detect blocking parameters of the plurality of photovoltaic strings, and send the blocking parameters of the plurality of photovoltaic strings to the controller. The controller may be configured to control, based on the illumination angles, the plurality of photovoltaic racks to rotate by an angle, and is configured to: determine a photovoltaic rack blocking relationship based on the blocking parameters of the plurality of photovoltaic strings, and adjust a rotation angle of a first photovoltaic rack or a second photovoltaic rack based on the photovoltaic rack blocking relationship. The photovoltaic rack blocking relationship is used to represent that the second photovoltaic rack is blocked by the first photovoltaic rack.

If the foregoing system framework is used, a photovoltaic rack blocking relationship in the photovoltaic system may be determined by using a blocking status that is of a photovoltaic string in a photovoltaic rack rotation process and that is detected by the detection module, and rotation angles of photovoltaic racks between which a photovoltaic rack blocking relationship exists are adjusted based on the photovoltaic rack blocking relationship, to eliminate blocking between the photovoltaic racks, and improve an electric energy yield of a photovoltaic string connected to a blocked photovoltaic rack, thereby improving an electric energy yield of the entire photovoltaic system.

In a possible design, the detection module includes a plurality of photoelectric sensors disposed on each photovoltaic string in the plurality of photovoltaic strings. Each photoelectric sensor in the plurality of photoelectric sensors may be configured to detect an illumination parameter of each photovoltaic string. The blocking parameters of the plurality of photovoltaic strings may include illumination parameters of the plurality of photovoltaic strings.

If the foregoing system framework is used, an illumination parameter of a photovoltaic string may be determined based on parameters output by photoelectric sensors disposed on the photovoltaic string, and the illumination parameter output by the photovoltaic string is sent to the controller. The controller may determine a photovoltaic string blocking relationship based on the received illumination parameter, determine a photovoltaic rack blocking relationship by using the photovoltaic string blocking relationship, and eliminate the photovoltaic rack blocking relationship, to improve the electric energy yield of the photovoltaic system.

In a possible design, the adjusting a rotation angle of the photovoltaic rack based on the photovoltaic rack blocking relationship sent by the detection module includes:
sending a first control signal to the first photovoltaic rack, where the first control signal is used to control the first photovoltaic rack to tilt at a first angle in a target direction; or sending a second control signal to the second photovoltaic rack, where the second control signal is used to control the second photovoltaic rack to tilt at a second angle in a target direction.

If the foregoing system framework is used, the first photovoltaic rack or the second photovoltaic rack between which a photovoltaic rack blocking relationship exists may be controlled to rotate in the target direction, to eliminate the blocking relationship between the first photovoltaic rack and the second photovoltaic rack, thereby improving the electric energy yield of the photovoltaic system.

The detection module is configured to detect power parameters output by the plurality of photovoltaic strings connected to each photovoltaic rack in the plurality of photovoltaic racks. The blocking parameters of the plurality of photovoltaic strings include power parameters output by the plurality of photovoltaic strings.

If the foregoing system framework is used, the plurality of photovoltaic racks in the photovoltaic system have a same illumination condition. Therefore, if no blocking relationship exists between the photovoltaic racks, the power parameters output by the plurality of photovoltaic strings connected to all the photovoltaic racks are close to each other. When blocking exists between the photovoltaic racks, some photovoltaic strings on a blocked photovoltaic system cannot be illuminated, and power parameters output by the blocked photovoltaic strings change (the output power parameters are decreased). In this way, whether a blocking relationship exists between the photovoltaic racks can be accurately determined by using the power parameters output by the plurality of photovoltaic strings connected to the photovoltaic racks.

The controller is further configured to establish a correspondence model between a photovoltaic rack blocking relationship and a target moment based on the power parameters output by the plurality of photovoltaic strings connected to each photovoltaic rack in the plurality of photovoltaic racks.

If the foregoing system framework is used, the correspondence model between a photovoltaic rack blocking relationship and a target moment may be established based on a power parameter that is output by the photovoltaic rack at each moment in the photovoltaic rack rotation process. The established correspondence model between a photovoltaic rack blocking relationship and a target moment is stored into the controller. In this way, blocking angle compensation is directly performed at a blocking moment for racks between which blocking exists, and operations are simple and fast. Therefore, detection does not need to be performed at each moment, and an energy loss of the photovoltaic system is reduced.

The correspondence model between a photovoltaic rack blocking relationship and a target moment is established based on the following steps:
controlling, at the target moment, the first photovoltaic rack to tilt at a third angle in the target direction; receiving power parameters that are output by a plurality of photovoltaic strings connected to photovoltaic racks other than the first photovoltaic rack and that are output by the detection module; when determining that a power parameter output by at least one photovoltaic string connected to the second photovoltaic rack changes, determining the photovoltaic rack blocking relationship; and recording the correspondence model between the photovoltaic rack blocking relationship and the target moment, where the photovoltaic string may be connected to the photovoltaic rack by using a slot disposed on the photovoltaic rack.

If the foregoing system framework is used, the first photovoltaic rack may be controlled, at different moments, to rotate in different directions (for example, directions of the sun are different in the morning and in the afternoon, and the photovoltaic rack needs to rotate in the direction of the sun). In a rotation process, the power parameters output by the plurality of photovoltaic strings connected to the other photovoltaic racks in the photovoltaic system are collected. If no blocking exists between photovoltaic racks, the power parameters output by the plurality of photovoltaic strings connected to the plurality of photovoltaic racks other than the first photovoltaic rack are close to each other. If it is detected that a value of the power parameter output by the at least one photovoltaic string connected to the second photovoltaic rack changes, it may be determined that a blocking relationship exists between the second photovoltaic rack and the first photovoltaic rack, and the target moment is recorded. In the foregoing manner, photovoltaic rack blocking relationships that exist at different moments and that are in the entire photovoltaic system may be obtained, and the correspondence model between a photovoltaic rack blocking relationship and a target moment is established based on the obtained photovoltaic rack blocking relationships, so that blocking angle compensation is performed at the target moment for photovoltaic racks between which a blocking relationship exists.

In a possible design, before establishing the correspondence model between a photovoltaic rack blocking relationship and a target moment, the second controller further needs to determine a plurality of photovoltaic strings connected to the first photovoltaic rack, to subsequently detect whether a power parameter output by the photovoltaic string connected to the photovoltaic rack changes. A determining process may specifically include: controlling the first photovoltaic rack to rotate by a fourth angle in the target direction; receiving power parameters that are output by a plurality of photovoltaic strings and that are output by the detection module; and when determining that a power parameter output by at least one photovoltaic string changes, determining that the at least one photovoltaic string whose power parameter changes is connected to the first photovoltaic rack. The fourth angle is less than a preset angle threshold.

If the foregoing system framework is used, because angles at which photovoltaic strings are illuminated by the sun are different, power parameters output by the photovoltaic strings are different. Connection relationships between the plurality of photovoltaic strings and the plurality of photovoltaic racks in the photovoltaic system are determined based on the concept. The first photovoltaic rack is used as an example. When the first photovoltaic rack is controlled to rotate, the power parameters output by the photovoltaic strings in the photovoltaic system are detected. If it is detected that power parameters output by a plurality of photovoltaic strings change, it may be determined that the plurality of photovoltaic strings whose power parameters change are connected to the first photovoltaic rack. The connection relationships between the plurality of photovoltaic racks and the plurality of photovoltaic strings in the photovoltaic system are separately determined by using the foregoing method.

In a possible design, the determining that a power parameter output by at least one photovoltaic string changes includes:
separately comparing the power parameters output by the plurality of photovoltaic strings with power parameters that are output by the plurality of photovoltaic strings before the first photovoltaic rack rotates by the fourth angle, and determining a photovoltaic string whose power parameter value changes as a photovoltaic string whose output power parameter changes.

If the foregoing system framework is used, when the first photovoltaic rack is controlled to rotate, illumination angles of the plurality of photovoltaic strings connected to the first photovoltaic rack change, and therefore output power parameters change. However, rotation angles of other photovoltaic racks do not change, and therefore power parameters output by a plurality of photovoltaic strings connected to the other photovoltaic racks are the same. Therefore, detection may be performed by detecting whether the power parameters output by the photovoltaic strings in the photovoltaic system change before and after the first photovoltaic rack rotates, and detection is convenient and highly accurate.

In a possible design, the determining that power parameters output by a plurality of photovoltaic strings connected to the second photovoltaic rack change includes:
when determining that differences between the power parameters output by the plurality of photovoltaic strings connected to the second photovoltaic rack and the power parameters output by the plurality of photovoltaic strings connected to the racks other than the first photovoltaic rack are greater than a preset threshold, determining that the power parameters output by the plurality of photovoltaic strings connected to the second photovoltaic rack change.

If the foregoing system framework is used, due to a component production difference between photovoltaic racks, a component production difference photovoltaic strings, and different data transmission distances, when no photovoltaic rack blocking relationship exists, there are also differences between the power parameters output by the plurality of photovoltaic strings connected to the plurality of photovoltaic racks. To avoid false detection, there may be differences between the power parameters output by the plurality of photovoltaic strings connected to the second photovoltaic rack and the power parameters output by the plurality of photovoltaic strings connected to the other photovoltaic racks. Only when the differences are greater than the preset threshold, it can be determined that a blocking relationship exists between the second photovoltaic rack and the first photovoltaic rack, thereby improving accuracy of a determining result.

In a possible design, the detecting power parameters output by a plurality of photovoltaic racks in the photovoltaic system includes:
detecting power parameters output by a plurality of photovoltaic strings connected to two photovoltaic racks adjacent to the first photovoltaic rack.

If the foregoing system framework is used, a distance between two adjacent photovoltaic racks in the photovoltaic system is relatively large. When photovoltaic rack blocking is caused due to a factor such as a terrain or a distance, only an adjacent photovoltaic rack is usually blocked, and another rack is not affected. Therefore, only the power parameters output by the plurality of photovoltaic strings connected to the two racks adjacent to the first photovoltaic rack may be detected to determine whether a blocking relationship exists between the photovoltaic racks, thereby improving a calculation speed of the photovoltaic rack blocking relationship and reducing a calculation amount.

In a possible design, the controller may further determine the second angle based on the following steps:
determining a blocked area of the second photovoltaic rack, and determining the second angle based on the blocked area.

If the foregoing system framework is used, a value of the second angle is accurately calculated by using the area that is of the second photovoltaic rack and that is blocked by the first photovoltaic rack.

In a possible design, the determining the second angle based on the blocked area includes:
determining areas of the plurality of photovoltaic strings connected to the second photovoltaic rack and the area blocked by the first photovoltaic rack, and determining the second angle based on the areas of the photovoltaic strings and the blocked area.

If the foregoing system framework is used, a ratio of the blocked area to a total area of the plurality of photovoltaic strings connected to the second photovoltaic rack may be determined based on the total area of the plurality of photovoltaic strings connected to the second photovoltaic rack and the area blocked by the first photovoltaic rack, and the value of the second angle is accurately calculated based on the calculated ratio.

In a possible design, the controller may further determine the second angle based on the following step:
determining the second angle by using a tilt angle of the second photovoltaic rack, power parameters output by the plurality of photovoltaic strings connected to the first photovoltaic rack, and the power parameters output by the plurality of photovoltaic strings connected to the second photovoltaic rack.

If the foregoing system framework is used, a current solar zenith angle may be accurately determined by using the tilt angle of the second photovoltaic rack. Target power parameters that are output by the two photovoltaic racks when no blocking exists are calculated by using the calculated zenith angle and a stored distance between the first photovoltaic rack and the second photovoltaic rack, the target parameters are compared with actually detected values, a blocking cause is determined based on a comparison result, and the second angle is determined based on the blocking cause.

### BRIEF DESCRIPTION OF DRAWINGS

FIG. 1 is a schematic diagram of an application scenario according to an embodiment of this application;
FIG. 2 is a first schematic structural diagram of a photovoltaic system according to an embodiment of this application;
FIG. 3 is a second schematic structural diagram of a photovoltaic system according to an embodiment of this application;
FIG. 4 is a schematic structural diagram of a photovoltaic system according to an embodiment of this application;
FIG. 5 is a first schematic diagram of performing blocking angle compensation according to an embodiment of this application;
FIG. 6 is a second schematic diagram of performing blocking angle compensation according to an embodiment of this application;
FIG. 7 is a schematic flowchart of a correspondence model between a photovoltaic rack blocking relationship and a target moment according to an embodiment of this application; and
FIG. 8 is a schematic flowchart of a connection relationship between a photovoltaic rack and photovoltaic strings according to an embodiment of this application.

### DESCRIPTION OF EMBODIMENTS

In embodiments of this application, "a plurality of" refers to two or more than two. "At least one" means one or more than one. "Or" describes an association relationship for describing associated objects and represents that two relationships may exist. For example, A or B may represent the following two cases: Only A exists, and only B exists. A and B may be in a singular or plural form.

In the embodiments of this application, "for example", "in some embodiments", "in another embodiment", and the like are used to provide an example, an illustration, or a description. Any embodiment or design scheme described as an "example" in this application should not be explained as being more preferred or having more advantages than another embodiment or design scheme. Exactly, "for example" is used to present a concept in a specific manner.

It should be noted that terms such as "first" and "second" in the embodiments of this application are only used for distinguishing between descriptions, cannot be understood as an indication or implication of relative importance, and cannot be understood as an indication or implication of a sequence. "Equal to" in the embodiments of this application may be used together with "greater than", and this is applicable to a technical solution used in case of "greater than"; or "equal to" may be used together with "less than", and this is applicable to a technical solution used in case of "less than". It should be noted that, when "equal to" is used together with "greater than", "equal to" is not used together with "less than", or when "equal to" is used together with "less than", "equal to" is not used together with "greater than".

The following describes an application scenario in the embodiments of this application.

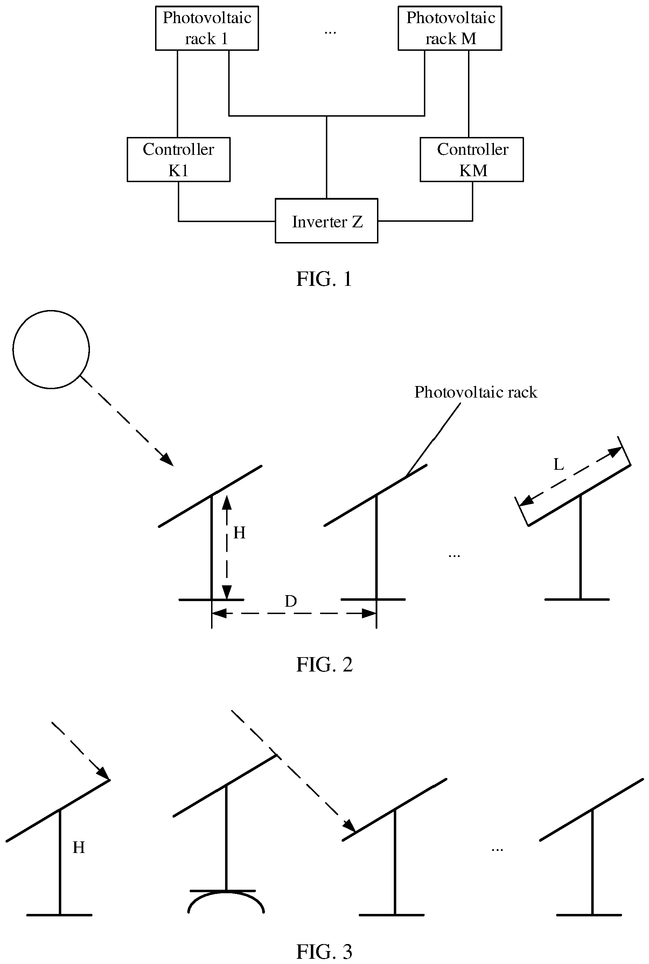

FIG. 1 is a possible schematic structural diagram of a photovoltaic system. As shown in FIG. 1, the photovoltaic system 100 may include photovoltaic racks 1 to M1, photovoltaic rack controllers K1 to KM that are in a one-to-one correspondence with the photovoltaic racks 1 to M, and an inverter Z. Each photovoltaic rack is connected to a plurality of photovoltaic strings (not shown). The photovoltaic string may be configured to convert solar energy into electric energy, and output the electric energy to a power-using device. The photovoltaic rack may be configured to rotate by a tilt angle of the photovoltaic rack to enable the plurality of photovoltaic modules connected to the photovoltaic rack to be at optimal illumination angles, thereby ensuring an electric energy yield of the photovoltaic system.

In the application scenario shown in FIG. 1, a current photovoltaic rack control manner is shown in FIG. 2. The controller controls a rotation angle of the photovoltaic rack by using a distance D between a front row and a current row of photovoltaic racks, a width L of the photovoltaic rack, a height H of the photovoltaic rack, and a solar zenith angle, to enable the plurality of photovoltaic strings connected to each photovoltaic rack to be at the optimal illumination angles, thereby improving the electric energy yield of the photovoltaic system.

However, in actual implementation, due to a factor such as a terrain or an installation error, actual distances between two adjacent photovoltaic racks may be different, or heights of two adjacent photovoltaic strings may be different. When the rotation angle of the photovoltaic rack is controlled based on the foregoing manner, some photovoltaic racks may be blocked by other photovoltaic racks. As shown in FIG. 3, some photovoltaic strings connected to a blocked photovoltaic rack cannot be illuminated by the sun, consequently output powers are decreased, and the electric energy yield of the entire photovoltaic system is affected.

Therefore, in the current photovoltaic rack control manner, some photovoltaic racks in the photovoltaic system may be blocked in some application scenarios, and consequently the electric energy yield of the photovoltaic system is reduced.

To resolve the foregoing problem, the embodiments of this application provide a photovoltaic system, to adjust rotation angles of photovoltaic racks between which a photovoltaic rack blocking relationship exists in a running process of the photovoltaic system, to eliminate a problem of blocking between the photovoltaic racks, and improve an electric energy yield of a blocked photovoltaic rack, thereby improving an electric energy yield of the photovoltaic system.

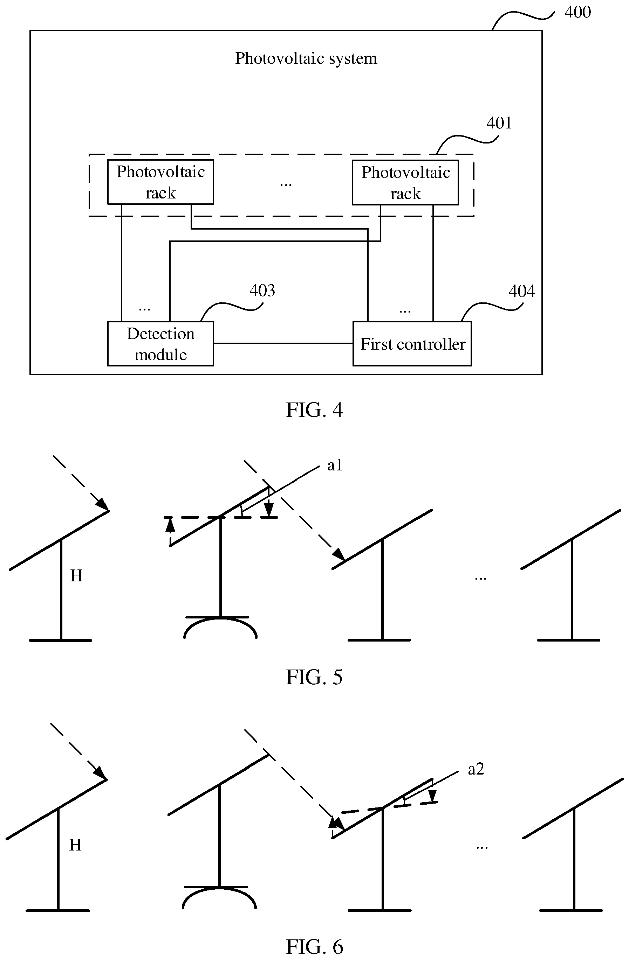

FIG. 4 is a schematic structural diagram of a photovoltaic system according to an embodiment of this application. The photovoltaic rack 400 may include a plurality of photovoltaic racks 401, a plurality of photovoltaic strings 402 (not shown) connected to the plurality of photovoltaic racks 401, a detection module 403, and a controller 404.

The detection module 403 may be connected to the controller 404 and the plurality of photovoltaic strings 402 respectively. The controller 404 may be connected to the plurality of photovoltaic racks 401.

Each photovoltaic rack in the plurality of photovoltaic racks 401 is configured to rotate by an angle under control of the first controller 404, to adjust illumination angles of a plurality of connected photovoltaic strings. Each photovoltaic string in the plurality of photovoltaic strings 402 is configured to convert light energy into electric energy. Voltage of electric energy output by the plurality of photovoltaic strings is first voltage.

If the first voltage output by the plurality of photovoltaic strings is direct current voltage, the photovoltaic system 400 may further include an inverter. The inverter is configured to perform DC/AC conversion on the first voltage output by the plurality of photovoltaic strings 402, to output second voltage, where the second voltage is alternating current voltage, and is configured to supply power to a power-using device.

The detection module 404 may be configured to: detect blocking parameters of the plurality of photovoltaic strings, and send the blocking parameters of the plurality of photovoltaic strings to the controller. The controller 404 may be configured to control, based on the illumination angles, the plurality of photovoltaic racks to rotate by an angle, and is configured to: determine a photovoltaic rack blocking relationship based on the blocking parameters of the plurality of photovoltaic strings, and adjust a rotation angle of a first photovoltaic rack or a second photovoltaic rack based on the photovoltaic rack blocking relationship. The photovoltaic rack blocking relationship may be used to represent that the second photovoltaic rack is blocked by the first photovoltaic rack.

In this embodiment of this application, the first controller 404 may deliver a host computer instruction to the plurality of photovoltaic racks 401, to instruct to adjust rotation angles of the plurality of photovoltaic racks.

In an example, the photovoltaic system 400 may include a plurality of sub-controllers corresponding to the plurality of photovoltaic racks 401, and each sub-controller is connected to a corresponding photovoltaic rack. The first controller 404 may send a host computer instruction to the plurality sub-controllers, and control, by using the sub-controller, each photovoltaic rack to adjust rotation.

Specifically, when the controller 404 determines that a photovoltaic rack blocking relationship exists between the first photovoltaic rack and the second photovoltaic rack in the photovoltaic system 400, the controller 404 may send a first control signal to the first photovoltaic rack, where the first control signal is used to control the first photovoltaic rack to tilt at a first angle in a target direction, or send a second control signal to the second photovoltaic rack, where the second control signal is used to control the second photovoltaic rack to tilt at a second angle in a target direction. That is, the controller 404 performs, by using the first angle or the second angle, blocking angle compensation for the first photovoltaic rack and the second photovoltaic rack between which a photovoltaic rack blocking relationship exists, to eliminate the blocking relationship between the first photovoltaic rack and the second photovoltaic rack.

In an example, as shown in FIG. 5, the controller 404 may perform blocking angle compensation by adjusting the first photovoltaic rack to tilt at the first angle a1, to eliminate the blocking relationship between the first photovoltaic rack and the second photovoltaic rack, thereby improving powers output by a plurality of photovoltaic strings connected to the blocked second photovoltaic rack, and improving an electric energy yield of the photovoltaic system.

In another example, as shown in FIG. 6, the controller 404 may perform blocking angle compensation by controlling the second photovoltaic rack to tilt at the second angle a2, to eliminate the blocking relationship between the first photovoltaic rack and the second photovoltaic rack, thereby improving powers output by a plurality of photovoltaic strings connected to the blocked second photovoltaic rack, and improving an electric energy yield of the photovoltaic system.

The photovoltaic rack blocking relationship may be caused by a distance or because a height of the photovoltaic rack is equivalent to a horizontal plane. Therefore, when the first photovoltaic rack and the second photovoltaic rack between which a photovoltaic rack blocking relationship exists are controlled to rotate by a same angle, the photovoltaic racks have different blocking statuses. Therefore, the first angle and the second angle that are used to perform blocking angle compensation may have different angle values. Details are not described herein in this application.

In an example, in a process of sending the first control signal to the first photovoltaic rack or sending the second control signal to the second photovoltaic rack for blocking angle compensation, a data transmission delay may exist between a first moment at which the controller sends the control signal to the first photovoltaic rack or the second photovoltaic rack and a second moment at which the first photovoltaic rack or the second photovoltaic rack receives the control signal. Therefore, to accurately control blocking angle compensation, within preset duration before a target moment, the first control signal may be sent to the first photovoltaic rack or the second control signal may be sent to the second photovoltaic rack, to perform blocking angle compensation for the photovoltaic rack at a blocking moment. The preset duration may be determined based on the transmission delay between the photovoltaic rack and the controller in the photovoltaic system and duration for detecting the photovoltaic rack blocking relationship from a correspondence model. This is not specifically limited in this embodiment of this application.

In this embodiment of this application, blocking angle compensation may be performed by controlling the first photovoltaic rack to tilt at the first angle in the target direction or controlling the second photovoltaic rack to tilt at the second angle in the target direction. The following describes a process of determining the second angle by using an example in which blocking angle compensation is performed by using the second angle.

Specifically, the second angle used to perform blocking compensation for the first photovoltaic rack may be determined in the following two manners:
Manner 1: The second angle may be determined by using an area that is of the second photovoltaic rack and that is blocked by the first photovoltaic rack. For the plurality of photovoltaic racks included in the photovoltaic system, a rotation angle of each photovoltaic rack is determined by using a distance that is between a front row and a current row of photovoltaic racks and that is calculated when the photovoltaic rack is installed, a height of the photovoltaic rack relative to the ground, a width of the photovoltaic rack, and a solar zenith angle. Therefore, when blocking and a calculation error are ignored, power parameters output by the plurality of photovoltaic strings connected to all the photovoltaic racks are close to each other. If the second photovoltaic rack is blocked by the first photovoltaic rack, some photovoltaic strings connected to the second photovoltaic rack cannot be illuminated by the sun and cannot output electric energy, and power parameters output by the plurality of photovoltaic strings connected to the second photovoltaic rack are decreased. In this case, the area that is of the second photovoltaic rack and that is blocked by the first photovoltaic rack may be determined based on differences between the power parameters that are output by the plurality of photovoltaic strings connected to the second photovoltaic rack at the target moment and power parameters output by a plurality of photovoltaic strings connected to photovoltaic racks other than the first photovoltaic rack, and the power parameter output by each photovoltaic string.

Specifically, after the foregoing differences are detected, because all photovoltaic strings in a plurality of photovoltaic strings connected to a photovoltaic rack have a same area and illumination angle, powers output by all the photovoltaic strings are equal. A power output by each photovoltaic string may be determined based on the power parameters output by the plurality of photovoltaic strings connected to the photovoltaic racks other than the first photovoltaic rack and a quantity of the plurality of photovoltaic strings connected to the photovoltaic racks. The area that is of the second photovoltaic rack and that is blocked by the first photovoltaic rack may be determined based on the obtained differences and the power parameter output by each photovoltaic string.

In an example, after the blocked area is determined, a total area of the plurality of photovoltaic strings connected to the second photovoltaic string is calculated, a ratio of the blocked area to the total area is calculated, and the second angle is determined based on the ratio.

Manner 2: The second angle may be determined by using a tilt angle of the second photovoltaic rack, power parameters output by a plurality of photovoltaic strings connected to the first photovoltaic rack, and the power parameters output by the plurality of photovoltaic strings connected to the second photovoltaic rack.

Specifically, first power parameters that are output by the plurality of photovoltaic strings connected to the first photovoltaic rack when no blocking exists are calculated by using a current solar zenith angle, the tilt angle of the second rack, and stored power parameters that are of the photovoltaic strings and that exist at different moments (if no blocking exists between the first photovoltaic rack and the second photovoltaic rack, the power parameters output by the plurality of photovoltaic strings connected to the second photovoltaic rack are equal to the first power parameters). The power parameters output by the plurality of photovoltaic strings connected to the first photovoltaic rack and the power parameters output by the plurality of photovoltaic strings connected to the second photovoltaic rack are separately compared with the first power parameters, a blocking cause (a height or a distance) is determined based on a comparison result, and a value of the second angle for performing blocking compensation is determined based on the blocking cause.

It should be understood that in the foregoing two manners of determining the second angle, the second angle is calculated based on the photovoltaic rack control manner shown in FIG. 2. In this embodiment of this application, another control manner may be used to control the rotation angle of the photovoltaic rack, and a principle of calculating an angle for performing blocking compensation is the same. This is not limited in this embodiment of this application.

When the photovoltaic system 400 provided in this embodiment of this application supplies power to the power-using device, a photovoltaic rack blocking relationship in a photovoltaic rack rotation process may be detected by using the detection module 403, and rotation angles of photovoltaic racks between which a photovoltaic rack blocking relationship exists are adjusted based on the photovoltaic rack blocking relationship, to eliminate the photovoltaic rack blocking relationship, and improve an electric energy yield of a photovoltaic string connected to a blocked photovoltaic rack, thereby improving the electric energy yield of the entire photovoltaic system.

In this embodiment of this application, the detection module 403 configured to determine the photovoltaic rack blocking relationship in the photovoltaic system 400 may have two specific structures based on different locations at which a detection component is connected to a component. With reference to an embodiment, the following describes a structure of the detection module 403 provided in this embodiment of this application. The following two solutions may be specifically included:
Solution 1: The detection module 403 may include a plurality of photoelectric sensors disposed on each photovoltaic string in the plurality of photovoltaic strings.

Each photoelectric sensor in the plurality of photoelectric sensors is configured to detect an illumination parameter of each photovoltaic string. Parameters output by all photovoltaic strings constitute photovoltaic parameters of the plurality of photovoltaic strings.

The blocking parameters of the plurality of photovoltaic strings may include illumination parameters of the plurality of photovoltaic strings.

Specifically, when at least one photovoltaic string connected to the second photovoltaic rack is blocked, illumination of a plurality of photoelectric sensors disposed on the at least one photovoltaic string changes, and a current, resistance, or voltage on the photoelectric sensor also changes accordingly. In this embodiment of this application, the blocking parameters of the plurality of photovoltaic strings may include one or more of the following: output currents, voltage, or resistance of the plurality of photoelectric sensors.

Solution 2: The detection module 403 is configured to detect power parameters output by the plurality of photovoltaic strings connected to each photovoltaic rack in the plurality of photovoltaic racks. The blocking parameters of the plurality of photovoltaic strings include power parameters output by the plurality of photovoltaic strings.

It should be understood that the plurality of photovoltaic racks have a same illumination condition. Therefore, if no blocking exists between the plurality of photovoltaic racks in the photovoltaic system 400, the power parameters output by the plurality of photovoltaic strings connected to the plurality of photovoltaic racks are close to each other. If blocking exists between the photovoltaic racks, some photovoltaic strings connected to a blocked photovoltaic rack cannot be illuminated by the sun, and output power parameters are decreased. When it is detected that power parameters output by a plurality of photovoltaic strings connected to a photovoltaic rack are greater than a preset threshold, it may be determined that the photovoltaic rack is blocked.

For example, the detection module 403 may be connected to the plurality of photovoltaic strings 402 to directly obtain the power parameters output by the plurality of photovoltaic strings 402. The detection module 403 may be an inverter connected to the plurality of photovoltaic strings 402.

Because an angle at which the sun provides illumination in the photovoltaic system does not change in a short time period, when the controller 404 determines photovoltaic rack blocking relationships for the plurality of photovoltaic racks 401 in the photovoltaic system 400, the controller 404 establishes a correspondence model between a photovoltaic rack blocking relationship and a target moment. The model records photovoltaic rack blocking relationships and blocking times (target times). When the photovoltaic system runs the next time, the controller 404 directly performs blocking angle compensation at the target moment for photovoltaic racks between which a photovoltaic rack blocking relationship exists, to avoid repeated detection, improve a photovoltaic rack compensation speed, and improve the electric energy yield of the photovoltaic system.

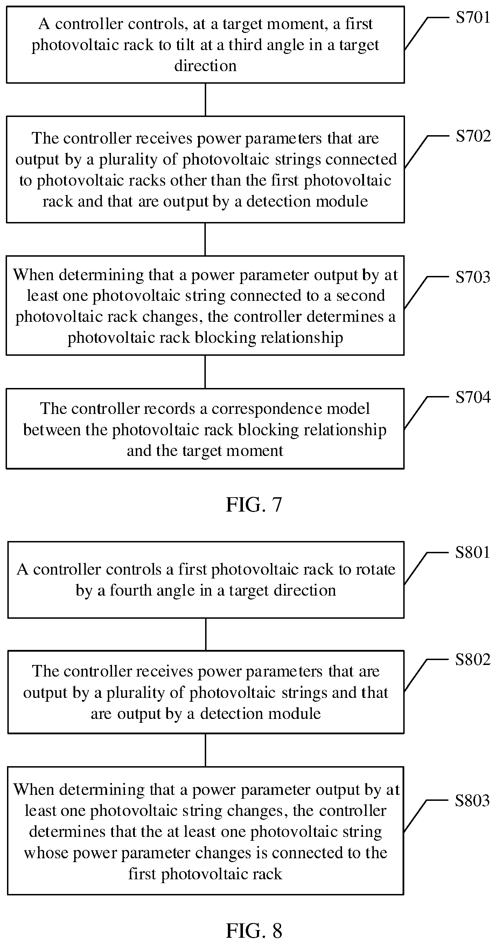

For the correspondence model between a photovoltaic rack blocking relationship and a target moment provided in this embodiment of this application, as shown in FIG. 7, a process of establishing a blocking relationship of the first photovoltaic rack in the correspondence model is used, and specifically includes the following steps. It should be noted that the following steps are used to establish a photovoltaic rack blocking correspondence model that is of each photovoltaic rack and that exists at each moment.

Step 701: The controller controls, at the target moment, the first photovoltaic rack to tilt at a third angle in the target direction.

A purpose of the photovoltaic system is to convert sunlight into electric energy and then be connected to a power grid to supply power to a user, but the sunlight has different illumination directions in the morning and in the afternoon. Therefore, the following is described in detail by using the first photovoltaic rack and the sunlight being in a first direction in the morning as an example.

For example, the first photovoltaic rack is controlled, at the target moment, to tilt at the third angle in the first direction.

Specifically, when a blocking relationship is ignored, the third angle may be calculated with reference to the manner of determining the rotation angle of the photovoltaic rack in FIG. 2. Certainly, the third angle may be determined in another manner. Details are not described in this application.

Step 702: The controller receives the power parameters that are output by the plurality of photovoltaic strings connected to the photovoltaic racks other than the first photovoltaic rack and that are output by the detection module.

In some embodiments, a distance between two adj acent photovoltaic racks in the photovoltaic system is relatively large. When photovoltaic rack blocking is caused due to a factor such as a terrain or a distance, only an adjacent photovoltaic rack is usually blocked, and another rack is not affected. Therefore, to improve a calculation speed and reduce a calculation amount, when the power parameters output by the plurality of photovoltaic strings connected to the photovoltaic racks other than the first photovoltaic rack are detected, only power parameters output by a plurality of photovoltaic strings connected to two racks adjacent to the first photovoltaic rack may be detected.

For example, power parameters output by a plurality of photovoltaic strings connected to the initial photovoltaic rack adjacent to the first photovoltaic rack in the first direction are detected.

In another embodiment, to ensure accuracy of a detection result, when the power parameters output by the plurality of photovoltaic strings connected to the photovoltaic racks other than the first photovoltaic rack are detected, power parameters output by a plurality of photovoltaic strings connected to all photovoltaic racks other than the first photovoltaic rack in the photovoltaic system may be detected.

Step 703: When determining that a power parameter output by the at least one photovoltaic string connected to the second photovoltaic rack changes, the controller determines the photovoltaic rack blocking relationship. The photovoltaic rack blocking relationship is that the second photovoltaic rack is blocked by the first photovoltaic rack.

A power parameter output by a photovoltaic rack is determined based on the sunlight and a weather condition on a current day. Due to a component production difference between photovoltaic racks, a component production difference between photovoltaic strings, and different data transmission distances, there is an error between the power parameters output by the plurality of photovoltaic strings connected to all the racks. In an example, to ensure detection accuracy, only when determining that the differences between the power parameters output by the plurality of photovoltaic strings connected to the second photovoltaic rack and the power parameters output by the plurality of photovoltaic strings connected to the racks other than the first photovoltaic rack are greater than a preset threshold, the controller can determine that the power parameters output by the plurality of photovoltaic strings connected to the second photovoltaic rack change. The preset threshold is not described in detail herein in this application.

In an example, when determining that the power parameters output by the plurality of photovoltaic strings connected to the photovoltaic racks other than the first photovoltaic rack do not change, the controller determines that no photovoltaic rack blocking relationship exists at the target moment.

Step 704: The controller records the correspondence model between the photovoltaic rack blocking relationship and the target moment.

Similarly, a photovoltaic rack blocking relationship existing when the sunlight is in a second direction in the afternoon may be detected in the manner of determining the blocking relationship that is of the first photovoltaic rack and that exists when the sunlight is in the first direction in the morning, to obtain a photovoltaic rack blocking relationship and a blocking time that are related to the first photovoltaic rack.

The controller determines, in the foregoing manner of determining the blocking relationship of the first photovoltaic rack, a photovoltaic rack blocking relationship and a blocking time that are of a photovoltaic rack other than the first photovoltaic rack in the photovoltaic system. The obtained photovoltaic rack blocking relationship and blocking time constitute the correspondence model between a photovoltaic rack blocking relationship and a target moment.

It should be noted that, because illumination of the sun in different seasons and under different weather conditions is different, blocking moments of the photovoltaic rack in the correspondence model between a photovoltaic rack blocking relationship and a target moment may be different accordingly. To ensure that blocking angle compensation is performed for a blocked photovoltaic rack at a correct time, and improve the electric energy yield of the photovoltaic system, data (the blocking moment, the photovoltaic rack blocking relationship, the angle for compensation, and the like) of the correspondence model between a photovoltaic rack blocking relationship and a target moment may be updated in real time as required.

It should be noted that the step of detecting power parameters output by a plurality of photovoltaic strings connected to a photovoltaic rack is used in the process of calculating the angle for blocking compensation and the process of establishing the correspondence model between a photovoltaic rack blocking relationship and a target moment. With reference to FIG. 8, the following uses the first photovoltaic rack as an example to describe in detail a process of determining the first photovoltaic rack and the plurality of photovoltaic strings connected to the photovoltaic rack.

Step 801: The controller controls the first photovoltaic rack to rotate by a fourth angle in the target direction. The fourth angle is less than a preset angle threshold.

Step 802: The controller receives power parameters that are output by a plurality of photovoltaic strings and that are output by the detection module.

Step 803: When determining that a power parameter output by at least one photovoltaic string changes, the controller determines that the at least one photovoltaic string whose power parameter changes is connected to the first photovoltaic rack.

In an example, if the first photovoltaic rack is not blocked by other photovoltaic racks, when the first photovoltaic rack is controlled to rotate by the fourth angle in the target direction, illumination angles of the plurality of photovoltaic strings connected to the first photovoltaic rack change, and illumination angles of a plurality of photovoltaic strings connected to the other photovoltaic racks do not change. Therefore, whether the power parameters output by the plurality of photovoltaic strings in the photovoltaic system change may be detected to determine whether a photovoltaic string is connected to the first photovoltaic rack.

When the first photovoltaic rack is controlled to rotate by the fourth angle, the illumination angles of the plurality of photovoltaic strings connected to the first photovoltaic rack change, and the output power parameters change. However, rotation angles of the other photovoltaic racks do not change, and power parameters output by the plurality of photovoltaic strings connected to the other photovoltaic racks are close to each other.

Specifically, the power parameters output by the plurality of photovoltaic strings may be separately compared with power parameters that are output by the plurality of photovoltaic strings before the first photovoltaic rack rotates by the fourth angle, and a photovoltaic string whose power parameter value changes is determined as a photovoltaic string whose output power parameter changes.

In an example, a blocking relationship may exist between some photovoltaic racks in the photovoltaic system. An example in which the first photovoltaic rack blocks the second photovoltaic rack is used. When the first photovoltaic rack rotates by the fourth angle in the target direction, the illumination angles of the plurality of photovoltaic strings connected to the first photovoltaic rack change, and the power parameters output by the plurality of photovoltaic strings connected to the first photovoltaic rack change. However, because some strings in the plurality of photovoltaic strings connected to the second photovoltaic rack are blocked and cannot be illuminated, a power parameter output by at least one photovoltaic string connected to the second photovoltaic rack also changes. To prevent the photovoltaic string connected to the second photovoltaic rack from being connected to the first photovoltaic rack by default, the fourth angle needs to be less than the preset angle threshold.

For example, when the sun is in the first direction (for example, eight o'clock to twelve o'clock) and a photovoltaic rack is controlled, based on the photovoltaic rack control manner shown in FIG. 2, to rotate, a target difference between an initial tilt angle (for example, a tilt angle of the photovoltaic rack at eight o'clock) and a final tilt angle (for example, a tilt angle of the photovoltaic rack at twelve o'clock) of the photovoltaic rack may be calculated, the target difference is evenly split into n parts, and a value of the preset threshold may be less than or equal to a value of one part. When a tilt angle of the first photovoltaic rack is less than the preset angle threshold, there is usually no photovoltaic rack blocking between photovoltaic racks, where n is a natural number, and the fourth angle and n may be adjusted based on field installation (for example, radiation, longitude and latitude, a distance between photovoltaic racks, and another difference).

## Claims

1. A photovoltaic system, comprising a plurality of photovoltaic racks (401), a plurality of photovoltaic strings (402) connected to the plurality of photovoltaic racks (401), a detection module (403), and a controller (404), wherein
each photovoltaic rack in the plurality of photovoltaic racks (401) is configured to rotate by an angle under control of the controller (404), to adjust illumination angles of a plurality of connected photovoltaic strings (402);
each photovoltaic string in the plurality of photovoltaic strings (402) is configured to convert light energy into electric energy;
the detection module (403) is separately connected to the controller (404) and the plurality of photovoltaic strings (402); and the detection module (403) is configured to: detect blocking parameters of the plurality of photovoltaic strings (402), and send the blocking parameters of the plurality of photovoltaic strings (402) to the controller (404); and
the controller (404) is connected to the plurality of photovoltaic racks (401); and the controller (404) is configured to: control, based on the illumination angles, the plurality of photovoltaic racks (401) to rotate by an angle, determine a photovoltaic rack blocking relationship based on the blocking parameters of the plurality of photovoltaic strings (402), and adjust a rotation angle of the first photovoltaic rack or the second photovoltaic rack based on the photovoltaic rack blocking relationship, wherein the photovoltaic rack blocking relationship is used to represent that the second photovoltaic rack is blocked by the first photovoltaic rack,
**characterized in that** the detection module (403) is configured to detect power parameters output by the plurality of photovoltaic strings (402) connected to each photovoltaic rack in the plurality of photovoltaic racks (401); and
the blocking parameters of the plurality of photovoltaic strings (402) comprise power parameters output by the plurality of photovoltaic strings (402);
wherein the controller (404) is further configured to establish a correspondence model between a photovoltaic rack blocking relationship and a target moment based on the power parameters output by the plurality of photovoltaic strings (402) connected to each photovoltaic rack in the plurality of photovoltaic racks (401); and
wherein the correspondence model between a photovoltaic rack blocking relationship and a target moment is established by using the following steps:
controlling, at the target moment, the first photovoltaic rack to tilt at a third angle in the target direction;
receiving power parameters that are output by a plurality of photovoltaic strings (402) connected to photovoltaic racks (401) other than the first photovoltaic rack and that are output by the detection module (403);
when determining that a power parameter output by at least one photovoltaic string connected to the second photovoltaic rack changes, determining the photovoltaic rack blocking relationship; and
recording the correspondence model between the photovoltaic rack blocking relationship and the target moment.

2. The system according to claim 1, wherein the adjusting a rotation angle of the photovoltaic rack based on the photovoltaic rack blocking relationship sent by the detection module (403) comprises:
sending a first control signal to the first photovoltaic rack, wherein the first control signal is used to control the first photovoltaic rack to tilt at a first angle in a target direction; or sending a second control signal to the second photovoltaic rack, wherein the second control signal is used to control the second photovoltaic rack to tilt at a second angle in the target direction.

3. The system according to claim 1 or 2, wherein before controlling, within the first preset time period, the first photovoltaic rack to tilt at a third angle in the target direction, the controller (404) is further configured to:
control the first photovoltaic rack to rotate by a fourth angle in the target direction;
receive power parameters that are output by a plurality of photovoltaic strings (402) and that are output by the detection module (403); and
when determining that a power parameter output by at least one photovoltaic string changes, determine that the at least one photovoltaic string whose power parameter changes is connected to the first photovoltaic rack, wherein
the fourth angle is less than a preset angle threshold.

4. The system according to claim 1 or 2, wherein the determining that a power parameter output by at least one photovoltaic string changes comprises:
separately comparing the power parameters output by the plurality of photovoltaic strings (402) with power parameters that are output by the plurality of photovoltaic strings (402) before the first photovoltaic rack rotates by the fourth angle, and determining a photovoltaic string whose power parameter value changes as a photovoltaic string whose output power parameter changes.

5. The system according to any one of claims 1 to 4, wherein the determining that power parameters output by a plurality of photovoltaic strings (402) connected to the second photovoltaic rack change comprises:
when determining that differences between the power parameters output by the plurality of photovoltaic strings (402) connected to the second photovoltaic rack and the power parameters output by the plurality of photovoltaic strings (402) connected to the racks other than the first photovoltaic rack are greater than a preset threshold, determining that the power parameters output by the plurality of photovoltaic strings (402) connected to the second photovoltaic rack change.

6. The system according to any one of claims 1 to 5, wherein the receiving power parameters that are output by a plurality of photovoltaic racks (401) in the photovoltaic system and that are output by the detection module (403) comprises:
receiving power parameters that are output by a plurality of photovoltaic strings (402) connected to two photovoltaic racks (401) adjacent to the first photovoltaic rack and that are output by the detection module (403).

7. The system according to any one of claims 2 to 6, wherein the controller (404) is configured to determine the second angle based on the following steps:
determining a blocked area of the second photovoltaic rack; and
determining the second angle based on the blocked area.

8. The system according to claim 7, wherein the determining the second angle based on the blocked area comprises:
determining areas of the plurality of photovoltaic strings (402) connected to the second photovoltaic rack and the area blocked by the first photovoltaic rack; and
determining the second angle based on the areas of the plurality of photovoltaic strings (402) and the blocked area.

9. The system according to any one of claims 2 to 8, wherein the controller (404) is configured to determine the second angle based on the following step:
determining the first angle by using a tilt angle of the second photovoltaic rack, power parameters output by a plurality of photovoltaic strings (402) connected to the first photovoltaic rack, and the power parameters output by the plurality of photovoltaic strings (402) connected to the second photovoltaic rack.

## Patentansprüche

1. Fotovoltaiksystem, umfassend eine Mehrzahl von Fotovoltaikgestellen (401), eine Mehrzahl von Fotovoltaiksträngen (402), die mit der Mehrzahl von Fotovoltaikgestellen (401) verbunden sind, ein Detektionsmodul (403), und eine Steuerung (404), wobei
jedes Fotovoltaikgestell in der Mehrzahl von Fotovoltaikgestellen (401) dazu konfiguriert ist, sich durch die Steuerung (404) um einen Winkel zu drehen, um die Beleuchtungswinkel einer Mehrzahl von verbundenen Fotovoltaiksträngen (402) anzupassen;
jeder Fotovoltaikstrang in der Mehrzahl von Fotovoltaiksträngen (402) dazu konfiguriert ist, Lichtenergie in elektrische Energie umzuwandeln;
das Detektionsmodul (403) separat mit der Steuerung (404) und der Mehrzahl von Fotovoltaiksträngen (402) verbunden ist; und das Detektionsmodul (403) dazu konfiguriert ist: Blockierparameter der Mehrzahl von Fotovoltaiksträngen (402) zu detektieren, und die Blockierparameter der Mehrzahl von Fotovoltaiksträngen (402) an die Steuerung (404) zu senden; und
die Steuerung (404) mit der Mehrzahl von Fotovoltaikgestellen (401) verbunden ist; und die Steuerung (404) dazu konfiguriert ist: basierend auf den Beleuchtungswinkeln die Mehrzahl von Fotovoltaikgestellen (401) so zu steuern, dass sie sich um einen Winkel drehen, basierend auf den Blockierparametern der Mehrzahl von Fotovoltaiksträngen (402) eine Fotovoltaikgestell-Blockierbeziehung zu bestimmen und einen Rotationswinkel des ersten Fotovoltaikgestells oder des zweiten Fotovoltaikgestells basierend auf der Fotovoltaikgestell-Blockierbeziehung anzupassen, wobei die Fotovoltaikgestell-Blockierbeziehung verwendet wird, um zu repräsentieren, dass das zweite Fotovoltaikgestell durch das erste Fotovoltaikgestell blockiert wird,
**dadurch gekennzeichnet, dass** das Detektionsmodul (403) dazu konfiguriert ist, Leistungsparameter zu detektieren, die von der Mehrzahl von Fotovoltaiksträngen (402) ausgegeben werden, die mit jedem Fotovoltaikgestell in der Mehrzahl von Fotovoltaikgestellen (401) verbunden sind; und
die Blockierparameter der Mehrzahl von Fotovoltaiksträngen (402) Leistungsparameter umfassen, die von der Mehrzahl von Fotovoltaiksträngen (402) ausgegeben werden;
wobei die Steuerung (404) ferner dazu konfiguriert ist, ein Korrespondenzmodell zwischen einer Fotovoltaikgestell-Blockierbeziehung und einem Zielmoment basierend auf den Leistungsparametern zu erstellen, die von der Mehrzahl von Fotovoltaiksträngen (402) ausgegeben werden, die mit jedem Fotovoltaikgestell in der Mehrzahl von Fotovoltaikgestellen (401) verbunden sind; und
wobei das Korrespondenzmodell zwischen einer Fotovoltaikgestell-Blockierbeziehung und einem Zielmoment unter Verwendung der folgenden Schritte erstellt wird:
Steuern des ersten Fotovoltaikgestells im Zielmoment, um es um einen dritten Winkel in die Zielrichtung zu neigen;
Empfangen von Leistungsparametern, die von einer Mehrzahl von Fotovoltaiksträngen (402) ausgegeben werden, die mit anderen Fotovoltaikgestellen (401) als dem ersten Fotovoltaikgestell verbunden sind und die vom Detektionsmodul (403) ausgegeben werden;
wenn bestimmt wird, dass sich ein von mindestens einem mit dem zweiten Fotovoltaikgestell verbundenen Fotovoltaikstrang ausgegebener Leistungsparameter verändert, Bestimmen der Fotovoltaikgestell-Blockierbeziehung; und
Aufzeichnen des Korrespondenzmodells zwischen der Fotovoltaikgestell-Blockierbeziehung und dem Zielmoment.

2. System nach Anspruch 1, wobei das Anpassen eines Drehwinkels des Fotovoltaikgestells basierend auf der vom Detektionsmodul (403) gesendeten Fotovoltaikgestell-Blockierbeziehung umfasst:
Senden eines ersten Steuersignals an das erste Fotovoltaikgestell, wobei das erste Steuersignal dazu verwendet wird, das erste Fotovoltaikgestell so zu steuern, dass es um einen ersten Winkel in eine Zielrichtung geneigt wird; oder Senden eines zweiten Steuersignals an das zweite Fotovoltaikgestell, wobei das zweite Steuersignal dazu verwendet wird, das zweite Fotovoltaikgestell so zu steuern, dass es um einen zweiten Winkel in die Zielrichtung geneigt wird.

3. System nach Anspruch 1 oder 2, wobei, vor dem Steuern, innerhalb der ersten voreingestellten Zeitspanne, dass sich das erste Fotovoltaikgestell um einen dritten Winkel in die Zielrichtung neigt, die Steuerung (404) ferner dazu konfiguriert ist:
das erste Fotovoltaikgestell zu steuern, um sich um einen vierten Winkel in der Zielrichtung zu drehen;
Leistungsparameter zu empfangen, die von einer Mehrzahl von Fotovoltaiksträngen (402) ausgegeben werden und die von dem Detektionsmodul (403) ausgegeben werden; und
wenn bestimmt wird, dass sich ein von mindestens einem Fotovoltaikstrang ausgegebener Leistungsparameter verändert, zu bestimmen, dass der mindestens eine Fotovoltaikstrang, dessen Leistungsparameter sich verändert, mit dem ersten Fotovoltaikgestell verbunden ist, wobei
der vierte Winkel kleiner ist als eine voreingestellte Winkelschwelle.

4. System nach Anspruch 1 oder 2, wobei das Bestimmen, dass sich ein von mindestens einem Fotovoltaikstrang ausgegebener Leistungsparameter verändert, umfasst:
getrenntes Vergleichen der von der Mehrzahl von Fotovoltaiksträngen (402) ausgegebenen Leistungsparameter mit Leistungsparametern, die von der Mehrzahl von Fotovoltaiksträngen (402) ausgegeben werden, bevor sich das erste Fotovoltaikgestell um den vierten Winkel dreht, und Bestimmen eines Fotovoltaikstrangs, dessen Leistungsparameterwert sich verändert, als ein Fotovoltaikstrang, dessen Ausgangsleistungsparameter sich verändert.

5. System nach einem der Ansprüche 1 bis 4, wobei das Bestimmen, dass sich die von einer Mehrzahl von Fotovoltaiksträngen (402), die mit dem zweiten Fotovoltaikgestell verbunden sind, ausgegebenen Leistungsparameter verändern, umfasst:
wenn bestimmt wird, dass die Unterschiede zwischen den Leistungsparametern, die von der Mehrzahl von Fotovoltaiksträngen (402), die mit dem zweiten Fotovoltaikgestell verbunden sind, ausgegeben werden, und den Leistungsparametern, die von der Mehrzahl von Fotovoltaiksträngen (402), die mit anderen Gestellen als dem ersten Fotovoltaikgestell verbunden sind, ausgegeben werden, größer als ein voreingestellter Schwellenwert sind, Bestimmen, dass sich die Leistungsparameter, die von der Mehrzahl der mit dem zweiten Fotovoltaikgestell verbundenen Fotovoltaikstränge (402) ausgegeben werden, verändern.

6. System nach einem der Ansprüche 1 bis 5, wobei das Empfangen von Leistungsparametern, die von einer Mehrzahl von Fotovoltaikgestellen (401) in dem Fotovoltaiksystem ausgegeben werden und die von dem Detektionsmodul (403) ausgegeben werden, umfasst:
Empfangen von Leistungsparametern, die von einer Mehrzahl von Fotovoltaiksträngen (402) ausgegeben werden, die mit zwei Fotovoltaikgestellen (401) verbunden sind, die an das erste Fotovoltaikgestell angrenzen, und die von dem Detektionsmodul (403) ausgegeben werden.

7. System nach einem der Ansprüche 2 bis 6, wobei die Steuerung (404) dazu konfiguriert ist, den zweiten Winkel basierend auf den folgenden Schritten zu bestimmen:
Bestimmen einer blockierten Fläche des zweiten Fotovoltaikgestells; und
Bestimmen des zweiten Winkels basierend auf der blockierten Fläche.

8. System nach Anspruch 7, wobei das Bestimmen des zweiten Winkels basierend auf der blockierten Fläche umfasst:
Bestimmen von Flächen der Mehrzahl von Fotovoltaiksträngen (402), die mit dem zweiten Fotovoltaikgestell verbunden sind, und der Fläche, die durch das erste Fotovoltaikgestell blockiert wird; und
Bestimmen des zweiten Winkels basierend auf den Flächen der Mehrzahl von Fotovoltaiksträngen (402) und der blockierten Fläche.

9. System nach einem der Ansprüche 2 bis 8, wobei die Steuerung (404) dazu konfiguriert ist, den zweiten Winkel basierend auf dem folgenden Schritt zu bestimmen:
Bestimmen des ersten Winkels unter Verwendung eines Neigungswinkels des zweiten Fotovoltaikgestells, von Leistungsparametern, die von einer Mehrzahl von Fotovoltaiksträngen (402) ausgegeben werden, die mit dem ersten Fotovoltaikgestell verbunden sind, und der Leistungsparameter, die von der Mehrzahl von Fotovoltaiksträngen (402) ausgegeben werden, die mit dem zweiten Fotovoltaikgestell verbunden sind.

## Revendications

1. Système photovoltaïque, comprenant une pluralité de supports photovoltaïques (401), une pluralité de chaînes photovoltaïques (402) reliées à la pluralité de supports photovoltaïques (401), un module de détection (403), et un dispositif de commande (404), dans lequel
chaque support photovoltaïque de la pluralité de supports photovoltaïques (401) est configuré pour tourner d'un certain angle sous la commande du dispositif de commande (404), pour régler des angles d'éclairage d'une pluralité de chaînes photovoltaïques (402) reliées ;
chaque chaîne photovoltaïque de la pluralité de chaînes photovoltaïques (402) est configurée pour convertir de l'énergie lumineuse en énergie électrique ;
le module de détection (403) est relié séparément au dispositif de commande (404) et à la pluralité de chaînes photovoltaïques (402) ; et le module de détection (403) est configuré pour : détecter des paramètres de blocage de la pluralité de chaînes photovoltaïques (402), et envoyer les paramètres de blocage de la pluralité de chaînes photovoltaïques (402) au dispositif de commande (404) ; et
le dispositif de commande (404) est relié à la pluralité de supports photovoltaïques (401) ; et le dispositif de commande (404) est configuré pour : commander, sur la base des angles d'éclairage, la pluralité de supports photovoltaïques (401) afin qu'ils tournent d'un certain angle, déterminer une relation de blocage de support photovoltaïque sur la base des paramètres de blocage de la pluralité de chaînes photovoltaïques (402), et régler un angle de rotation du premier support photovoltaïque ou du deuxième support photovoltaïque sur la base de la relation de blocage de support photovoltaïque, dans lequel la relation de blocage de support photovoltaïque est utilisée pour représenter le fait que le deuxième support photovoltaïque est bloqué par le premier support photovoltaïque,
**caractérisé en ce que** le module de détection (403) est configuré pour détecter des paramètres de puissance émis par la pluralité de chaînes photovoltaïques (402) reliées à chaque support photovoltaïque de la pluralité de supports photovoltaïques (401) ; et
les paramètres de blocage de la pluralité de chaînes photovoltaïques (402) comprennent des paramètres de puissance émis par la pluralité de chaînes photovoltaïques (402) ;
dans lequel le dispositif de commande (404) est en outre configuré pour établir un modèle de correspondance entre une relation de blocage de support photovoltaïque et un moment cible sur la base des paramètres de puissance émis par la pluralité de chaînes photovoltaïques (402) reliées à chaque support photovoltaïque de la pluralité de supports photovoltaïques (401) ; et
dans lequel le modèle de correspondance entre une relation de blocage de support photovoltaïque et un moment cible est établi à l'aide des étapes suivantes :
la commande, au moment cible, du premier support photovoltaïque afin qu'il s'incline à un troisième angle dans la direction cible ;
la réception de paramètres de puissance qui sont émis par une pluralité de chaînes photovoltaïques (402) reliées à des supports photovoltaïques (401) autres que le premier support photovoltaïque et qui sont émis par le module de détection (403) ;
lorsqu'il est déterminé qu'un paramètre de puissance émis par au moins une chaîne photovoltaïque reliée au deuxième support photovoltaïque change, la détermination de la relation de blocage de support photovoltaïque ; et
l'enregistrement du modèle de correspondance entre la relation de blocage de support photovoltaïque et le moment cible.

2. Système selon la revendication 1, dans lequel le réglage d'un angle de rotation du support photovoltaïque sur la base de la relation de blocage de support photovoltaïque envoyée par le module de détection (403) comprend :
l'envoi d'un premier signal de commande au premier support photovoltaïque, dans lequel le premier signal de commande est utilisé pour commander le premier support photovoltaïque afin qu'il s'incline à un premier angle dans une direction cible ; ou l'envoi d'un deuxième signal de commande au deuxième support photovoltaïque, dans lequel le deuxième signal de commande est utilisé pour commander le deuxième support photovoltaïque afin qu'il s'incline à un deuxième angle dans la direction cible.

3. Système selon la revendication 1 ou 2, dans lequel avant de commander, dans la première période de temps prédéfinie, le premier support photovoltaïque afin qu'il s'incline à un troisième angle dans la direction cible, le dispositif de commande (404) est en outre configuré pour :
commander le premier support photovoltaïque afin qu'il tourne d'un quatrième angle dans la direction cible ;
recevoir des paramètres de puissance qui sont émis par une pluralité de chaînes photovoltaïques (402) et qui sont émis par le module de détection (403) ; et
lorsqu'il est déterminé qu'un paramètre de puissance émis par au moins une chaîne photovoltaïque change, déterminer que l' au moins une chaîne photovoltaïque dont le paramètre de puissance change est reliée au premier support photovoltaïque, dans lequel
le quatrième angle est inférieur à un seuil d'angle prédéfini.

4. Système selon la revendication 1 ou 2, dans lequel la détermination qu'un paramètre de puissance émis par au moins une chaîne photovoltaïque change comprend :
la comparaison séparée des paramètres de puissance émis par la pluralité de chaînes photovoltaïques (402) avec des paramètres de puissance qui sont émis par la pluralité de chaînes photovoltaïques (402) avant que le premier support photovoltaïque tourne du quatrième angle, et la détermination d'une chaîne photovoltaïque dont la valeur de paramètre de puissance change comme une chaîne photovoltaïque dont le paramètre de puissance émis change.

5. Système selon l'une quelconque des revendications 1 à 4, dans lequel la détermination que des paramètres de puissance émis par une pluralité de chaînes photovoltaïques (402) reliées au deuxième support photovoltaïque changent comprend :
lorsqu'il est déterminé que des différences entre les paramètres de puissance émis par la pluralité de chaînes photovoltaïques (402) reliées au deuxième support photovoltaïque et les paramètres de puissance émis par la pluralité de chaînes photovoltaïques (402) reliées aux supports autres que le premier support photovoltaïque sont supérieures à un seuil prédéfini, la détermination que les paramètres de puissance émis par la pluralité de chaînes photovoltaïques (402) reliées au deuxième support photovoltaïque changent.

6. Système selon l'une quelconque des revendications 1 à 5, dans lequel la réception de paramètres de puissance qui sont émis par une pluralité de supports photovoltaïques (401) du système photovoltaïque et qui sont émis par le module de détection (403) comprend :
la réception de paramètres de puissance qui sont émis par une pluralité de chaînes photovoltaïques (402) reliées à deux supports photovoltaïques (401) adjacents au premier support photovoltaïque et qui sont émis par le module de détection (403).

7. Système selon l'une quelconque des revendications 2 à 6, dans lequel le dispositif de commande (404) est configuré pour déterminer le deuxième angle sur la base des étapes suivantes :
la détermination d'une zone bloquée du deuxième support photovoltaïque ; et
la détermination du deuxième angle sur la base de la zone bloquée.

8. Système selon la revendication 7, dans lequel la détermination du deuxième angle sur la base de la zone bloquée comprend :
la détermination de zones de la pluralité de chaînes photovoltaïques (402) reliées au deuxième support photovoltaïque et de la zone bloquée par le premier support photovoltaïque ; et
la détermination du deuxième angle sur la base des zones de la pluralité de chaînes photovoltaïques (402) et de la zone bloquée.

9. Système selon l'une quelconque des revendications 2 à 8, dans lequel le dispositif de commande (404) est configuré pour déterminer le deuxième angle sur la base de l'étape suivante :
la détermination du premier angle à l'aide d'un angle d'inclinaison du deuxième support photovoltaïque, de paramètres de puissance émis par une pluralité de chaînes photovoltaïques (402) reliées au premier support photovoltaïque, et des paramètres de puissance émis par la pluralité de chaînes photovoltaïques (402) reliées au deuxième support photovoltaïque.
